# EUROPÄISCHE PATENTSCHRIFT

(11) **EP 2 465 725 B1**
(45) Veröffentlichungstag und Bekanntmachung des Hinweises auf die Patenterteilung: **04.11.2015**
(21) Anmeldenummer: 11193615.9
(22) Anmeldetag: 14.12.2011
(51) Int. Cl.: B60N 2/54, B60N 2/50, B60G 17/02

(54) **Federungsvorrichtung für Fahrzeugsitze und/oder Fahrzeugkabinen mit Elastomerelement**
Spring system device for vehicle seat and/or vehicle cabins with elastomer element
Dispositif de ressort pour sièges de véhicule et/ou cabines de véhicule dotés d'éléments élastomères

(30) Priorität: 15.12.2010 DE 102010054749
(43) Veröffentlichungstag der Anmeldung: 20.06.2012
(73) Patentinhaber: GRAMMER AG, 92224 Amberg (DE)
(72) Erfinder: Kolb, Jens, 92281 Königstein (DE)
(74) Vertreter: Hannke, Christian

(56) Entgegenhaltungen:
- EP-A1- 0 566 436
- DE-A1- 3 330 054
- DE-T2- 3 873 705
- FR-A1- 2 352 686
- GB-A- 1 401 881
- US-A- 1 544 248
- US-A1- 2004 113 338

## Beschreibung

Die Erfindung betrifft eine Federungsvorrichtung für Fahrzeugsitze und/oder Fahrzeugkabinen zum Federkraftbeaufschlagen einer Schwingungsbewegung von einem ersten gegenüber einem zweiten Bauteil, vorzugsweise in Fahrzeuglängs- und/oder -breitenrichtung, wobei mindestens ein sich in Fahrzeuglängs- und/oder -breitenrichtung erstreckendes Federelement in mindestens einem Endbereich mit einem ersten Bauteil und in seinem mittleren Bereich mit dem zweiten Bauteil verbunden ist, gemäß dem Oberbegriff des Patentanspruchs 1.

Es sind Horizontalfederungseinrichtungen für Fahrzeugsitze bekannt, die eine Spiralfeder aufweisen, welche vorzugsweise in Fahrzeugbreitenrichtung horizontal in einem Bauteil, welches sich gegenüber einem weiteren Bauteil schwingend bewegen kann, angeordnet ist. Hierbei ist die Spiralfeder vorzugsweise in ihrem mittleren Bereich in dem Bauteil eingespannt, wohingegen die Endbereiche der Spiralfeder mit dem weiteren Bauteil verbunden sind und sich in Schwingungsrichtung der Bauteile und damit quer beziehungsweise senkrecht zur Längsachse der Spiralfeder auslenken lassen.

Derartige Spiralfedern sind bei einer endseitigen Auslenkung in eine senkrecht zur Längsachse der Spiralfeder verlaufende Richtung sowohl einer Dehnungskraft als auch einer Biegungskraft unterworfen. Hierbei ist die Biegungskraft gegenüber der Dehnungskraft in ihrer Auswirkung auf die Belastung der Spiralfeder dominierender, welches dazu führt, dass die Biegungskraft nach langer Benutzung derartiger Federungsvorrichtungen mit Spiralfedern zu einer Verformung der Spiralfeder und somit zu einer unzureichenden Funktionsweise der gesamten Federungsvorrichtung führt.

Hinzu kommt, dass aufgrund der einwirkenden hohen Biegungskräfte bei starken Schwingungen mit starken Schwingungskräften, wie sie beispielsweise bei einer Abfederung beziehungsweise Abdämpfung einer Schwingungsbewegung einer ganzen Fahrzeugkabine auftreten können, herkömmliche Spiralfedern nur noch bedingt eingesetzt werden können, da deren Kraftaufnahme bei hohen, einwirkenden Biegungskräften begrenzt ist. Alternativ ließe sich eine Mehrzahl an Spiralfedern zur gemeinsamen Aufnahme derartiger Biegungskräfte anordnen. Dies hat jedoch zur Folge, dass die Federungsvorrichtungskonstruktion aufwändiger wird.

Die FR 2 352 686 A1 zeigt eine Federungsvorrichtung gemäß des Oberbegriffs des Anspruchs 1. DE3330054 zeigt eine Vorrichtung mit einer Federung, die in vertikaler Richtung wirksam ist, mit einem länglichen stabförmigen Elastomer-Federelement mit einer daran befestigten Metallfederplatte.

Demzufolge liegt der vorliegenden Erfindung die Aufgabe zugrunde, eine Federungsvorrichtung für Fahrzeugsitze und/oder Fahrzeugkabinen zum Federkraftbeaufschlagen einer Schwingungsbewegung zweier Bauteile, vorzugsweise in Fahrzeuglängs- und/oder -breitenrichtung, zur Verfügung zu stellen, bei der die Aufnahme von hohen Biegekräften möglich ist und die einen einfachen Aufbau aufweist.

Diese Aufgabe wird gemäß den Merkmalen des Patentanspruches 1 gelöst.

Kerngedanke der Erfindung ist, dass bei einer Federungsvorrichtung für Fahrzeugsitze und/oder Fahrzeugkabinen zum Federkraftbeaufschlagen einer Schwingungsbewegung von einem ersten gegenüber einem zweiten Bauteil, vorzugsweise in Fahrzeuglängs- und/oder -breitenrichtung, ein längliches Federelement aus biegsamen Elastomermaterial, welches stabförmig ausgebildet ist, verwendet wird. Das längliche Federelement aus Elastomermaterial erstreckt sich in Fahrzeuglängs- und/oder -breitenrichtung und ist in mindestens einem Bereich mit dem ersten Bauteil und in seinem mittleren Bereich mit dem zweiten Bauteil verbunden.

Eine derartige Federungsvorrichtung ist vorteilhaft aus einem günstigen und einfach zu handhabenden Material aufgebaut, nämlich einem Elastomermaterial. Dieses Elastomermaterial kann aufgrund seiner Strukturierung und der Anordnung verschiedener Durchgangslöcher oder dergleichen derart aufgebaut sein, dass es unterschiedliche Biegeeigenschaften zur Aufnahme von Biegekräften in verschiedenen Bereichen, also beispielsweise im mittleren und im Endbereich aufweist. Dies ermöglicht eine individuelle Ausbildung des Federelementes für bestimmte Erfordernisse, abhängig davon, ob große Schwingungskräfte abgedämpft beziehungsweise abgefedert werden sollen und ob bei geringen Kräften, bei denen der Endbereich des länglichen Federelementes nahezu ausschließlich ausgelenkt wird, eine weiche oder harte Dämpfung beziehungsweise Federung der kleinen Schwingungskräfte gewünscht ist. Dies kann erreicht werden, indem das Elastomermaterial in den Endbereichen aus einer anderen Zusammensetzung wie in dem mittleren Bereich, in dem es beispielsweise aus härterem Elastomermaterial besteht, welches bei stärkeren Schwingungen starke Biegekräfte beziehungsweise Schwingungskräfte der Bauteile aufnehmen kann, ausgebildet wird.

Der mittlere Bereich des länglichen Federelementes ist zumindest teilweise von dem zweiten Bauteil in einem Einspannbereich eingespannt, sodass sich die Endbereiche in Schwingungsrichtung bewegen können und die Schwingungsbewegung der zueinander schwingenden Bauteile abfedert beziehungsweise abdämpft werden.

Erfindungsgemäß weist die Federungsvorrichtung zumindest teilweise parallel zueinander verlaufende Metallstreifenelemente auf, die in Längsrichtung des Federelementes innerhalb des Elastomermaterials angeordnet sind. Diese Metallstreifenelemente sind im Rahmen eins Vulkanisierungsherstellungsprozesses in das Elastomermaterial dauerhaft eingelassen. Durch die Zusammensetzung des Elastomermateriales zwischen diesen zumindest teilweise parallel laufenden Metallstreifenelementen kann wiederum die Aufnahme unterschiedlicher Biegekräfte und damit die Abfederung der Schwingungskräfte beeinflusst werden. Dies bedeutet die Modifizierung einer Federkonstante des länglichen Federelementes und damit der gesamten Federvorrichtung bei Biegebeanspruchung.

Derartige Metallstreifenelemente lassen eine Biegung des länglichen Elastomerelementes in begrenztem Ausmaß zu und ermöglichen zugleich nach einer erfolgten Drehung des Elastomermateriales um seine Längsachse eine beabsichtigte Versteifung und damit eine Sperrung gegen Biegebeanspruchung und eine Sperrung der Abfederung und Abdämpfung durch das Elastomerelement, da die Metallstreifen dann mit ihrer Breitenrichtung in Schwingungsrichtung der Bauteile ausgerichtet sind und somit nicht gebogen werden können. Bevorzugt ist die Länge der Metallstreifenelemente geringer als die Länge des gesamten Federelementes, sodass die Endbereiche des Federelementes aus metallstreifenelementfreien Elastomerbereiche bestehen. Diese metallstreifenelementfreie Elastomerbereiche ermöglichen eine Dehnung des Elastomers in diesen Bereichen unabhängig von den Biegeigenschaften der Metallstreifenelemente, die als Federblätter ausgebildet sein können. Dies führt dazu, dass das Federelement aus Elastomermaterial beispielsweise zur Schockdämpfung eingesetzt werden kann, wenn das längliche Federelement beziehungsweise das Elastomerelement um seine Längsachse gedreht in einer 90°-Stellung derart angeordnet ist, dass die Metallstreifenelemente in ihrer Breitenrichtung in Schwingungsrichtung weisen und somit keine Biegung im Bereich der Metallstreifen zulassen. Vielmehr wird lediglich in den Endbereichen des Elastomerelementes eine Auslenkung oder Biegung stattfinden, die lediglich zur Aufnahme von in das Fahrzeug beziehungsweise dem Fahrzeugsitz und/oder der Fahrzeugkabine eingeleiteten Schwingungen zur Schockdämpfung dienen, jedoch sich nicht auf das ausgiebige Ausfedern von eingeleiteten Schwingungen für eine Abfederung der Schwingungsbewegungen auswirken

Die Metallstreifenelemente verlaufen von ihrem mittleren Bereich ausgehend zu ihren Endbereichen hin aus einer Parallelstellung in eine auseinanderlaufende Stellung, sodass die Metallstreifen in gebogener Form mit einem geringen Abstand im mittleren Bereich und einem größerem Abstand in ihren endseitigen Bereichen angeordnet sind. Vorteilhaft kann hierdurch eine progressive Federkennlinie hinsichtlich der Kraft als auch des ausgeübten Druckes erhalten werden, denn das Elastomerelement mit den darin integrierten Metallelementen weist in unterschiedlichen Bereichen verschiedene Federkonstanten aufgrund der unterschiedlichen Abstände der Metallstreifenelemente auf. Die Länge der Metallstreifenelemente bestimmt eine Feder-Dämpferkennlinie in ihrem Verlauf über den gesamten Federweg. Dies kann auch durch die Form, Länge und Position von Ausnehmungen und/oder Bohrungen in dem Elastomerelement und/oder den Metallstreifenelement erreicht werden.

Gemäß einer bevorzugten Ausführungsform weist das Federelement im mittleren Bereich einen runden Querschnitt auf, um im Einspannbereich des komplementär ausgebildeten zweiten Bauteiles um seine Längsachse drehbar angeordnet werden zu können. Hierdurch ist die auf einfache Weise die bereits beschriebene Drehung um 90° bezüglich der Längsachse des Federelementes möglich, um so einen verriegelten Zustand des Elastomerelementes beziehungsweise Federelementes bei einer 90°-Stellung der Metallstreifenelemente zu erhalten. Dennoch kann in dieser verriegelten Stellung in den Endbereichen des Elastomerelementes eine Stoßdämpfung beziehungsweise Schockdämpfung erhalten bleiben.

Der runde beziehungsweise kreisförmige Querschnitt des Elastomerelementes in seinem mittleren Bereich ermöglicht eine Drehung um seine Längsachse bei einem gleichzeitig stattfindenden formschlüssigen Eingriff in dem als Spange ausgebildeten Bauteil.

Die Metallstreifenelemente verlaufen in ihrer Breitenrichtung nach einer 90°-Drehung um ihre Längsachse in Schwingungsrichtung der Bauteile oder bei einer 0°-Drehstellung um ihre Längsachse senkrecht zur Schwingungsrichtung der Bauteile. Die Endbereiche des Federelementes weisen bevorzugt einen Abstand mit quadratischem Querschnitt auf, d.h. dass die Endbereiche vierkantig beziehungsweise quaderförmig ausgebildet sein können. Dies erleichtert die Befestigung dieser Endbereiche oder zumindest einer dieser Endbereiche mit dem weiteren Bauteil.

Die Metallstreifenelemente sind aus einem Material gefertigt, welches in ihrer Bereitenrichtung Unbiegsamkeit und senkrecht zur Breitenrichtung eine Biegsamkeit sicherstellen.

Weitere vorteilhafte Ausführungsformen ergeben sich aus den Unteransprüchen.

Vorteile und Zweckmäßigkeiten sind in der nachfolgenden Beschreibung in Verbindung mit der Zeichnung zu entnehmen. Hierbei zeigen:
- Fig.1: in einer schematischen Draufsicht eine Federungsvorrichtung gemäß dem Stand der Technik;
- Fig. 2a und 2b: in einer schematischen Ausschnittsdarstellung die erfindungsgemäße Federungsvorrichtung gemäß einer Ausführungsform der Erfindung in einer Ruhelage und in einem ausgefederten beziehungsweise verformten Zustand;
- Fig. 3a und 3b: in einer schematischen Darstellung das Federelement für die erfindungsgemäße Federungsvorrichtung in einer 0°- und 90°-Drehstellung und
- Fig. 4a und 4b: einen Fahrzeugsitz mit einer darin eingezeichneten Federungsvorrichtung gemäß der Ausführungsform der Erfindung an einer möglichen Position.

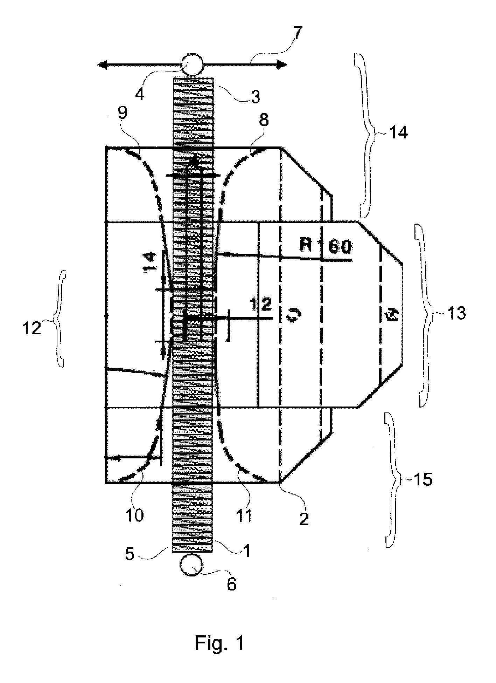

In Fig. 1 ist in einer schematischen Darstellung eine Federungsvorrichtung gemäß dem Stand der Technik wiedergegeben. Dieser Darstellung ist zu entnehmen, dass eine Spiralfeder 1 in einem Bauteil 2 in ihrem mittleren Bereich 13 eingespannt ist.

Ein Endbereich 3 mit einem Befestigungselement 4 sowie ein weiterer Endbereich 5 mit einem Befestigungselement 6 der Spiralfeder sind mit einem weiteren hier nicht dargestellten Bauteil verbunden, welches gegenüber dem Bauteil 2 eine Schwingungsbewegung in Richtung des Doppelpfeiles 7 durchführt.

Durch eine Schwingungsbewegung der Bauteile zueinander in Richtung 7 werden Endbereiche 14, 15 der Spiralfeder soweit ausgedehnt, dass sie an Kurvenbahnen 8, 9, 10 und 11 des Bauteiles 2 zum anliegen kommen und gleichzeitig in einem Einspannbereich 12 der mittlere Bereich festgehalten wird.

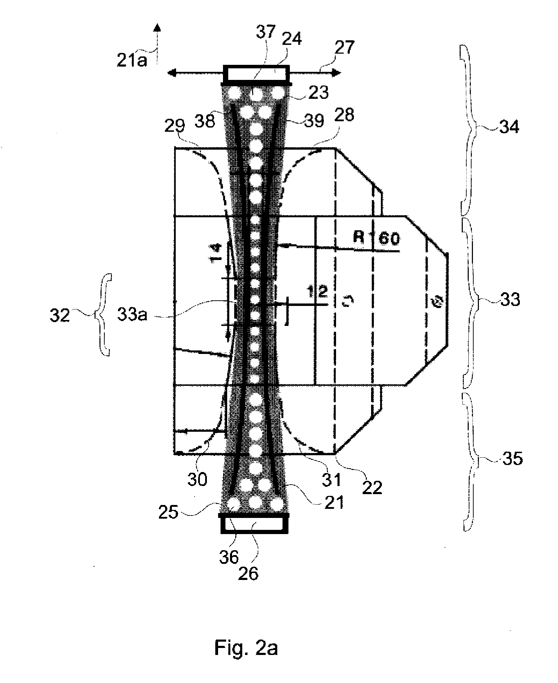

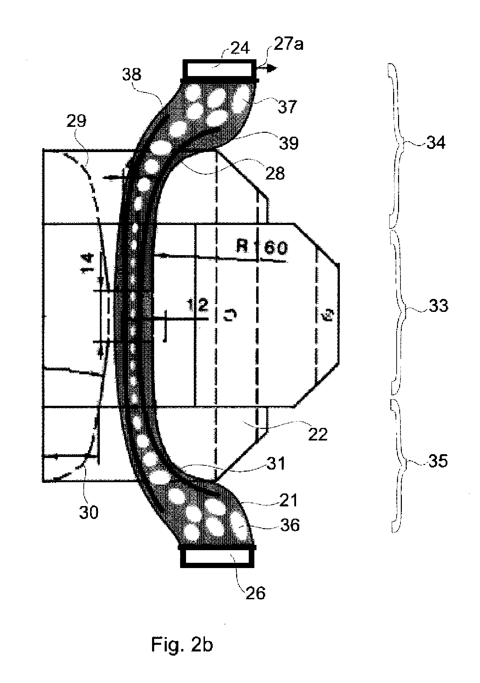

In Fig. 2a und 2b ist die Federungsvorrichtung gemäß einer Ausführungsform der Erfindung in einer schematischen Darstellung wiedergegeben. Bei dieser Darstellung handelt es sich um eine Draufsicht, wenn eine Schwingungsbewegung 27 in Fahrzeuglängsrichtung und in Fahrzeugbreitenrichtung stattfindet und somit ein Federelement 21 in horizontaler Richtung bei horizontal ausgerichtetem Fahrzeug ausgerichtet ist.

Das Federelement 21 besteht aus einem Elastomermaterial und ist innerhalb eines zweiten Bauteiles 22 in seinem mittleren Bereich 33 eingespannt. Hierfür weist das Bauteil 22 einen Einspannbereich 32 auf, in dem das Federelement beziehungsweise Elastomerelement 21 vorzugsweise einen kreisförmigen Querschnitt aufweist, wie es im Übrigen auch der komplementär ausgebildeten Bereich des Bauteiles 22 aufweist.

Das Elastomerelement beziehungsweise Federelement 21 ist in der Mitte mit einem geringen Durchmesse beziehungsweise geringen Außenabmessungsabständen und in seinen Endbereichen 34, 35 mit größeren Abständen beziehungsweise Durchmessern ausgebildet. Das Elastomerelement weist vorzugsweise Durchgangsöffnungen oder in das Material hinein verlaufende Öffnungen, beispielsweise in Form von Bohrungen, auf, die mit dem Bezugszeichen 37 und 36 wiedergegeben sind. Diese Öffnungen können in den Endbereichen 35, 34 größer ausgebildet sein und in dem mittleren Bereich 33 kleiner ausfallen. Dies wirkt sich unterschiedlich auf eine Federkonstante des Elastomermaterials und damit des Federelementes 21 aus.

Zusätzlich weist das Elastomermaterial des Federelementes 21 darin während des Vulkanisierungsprozesses eingearbeitete Metallstreifenelemente 38, 39 auf, die im mittleren Bereich 33 nahezu parallel zueinander verlaufen. In den Endbereichen 34, 35 hingegen laufen sie, wie es der Zeichnung entnehmbar ist, auseinander. Die Breitenrichtungen dieser Metallstreifenelemente 38, 39 sind parallel zueinander verlaufend.

Das konisch zugeschnittene Elastomer- beziehungsweise Federelement 21 kann bei einer eingeleiteten Schwingungsbewegung in Richtung des Doppelpfeiles 27 an Konturen 28, 29, 30, 31 des zweiten Bauteiles 22 anliegen. Hierfür wird ein hier nicht näher dargestelltes erstes Bauteil gegenüber dem zweiten Bauteil 22 in Richtung 27 bewegt, wobei das erste Bauteil an Abschnitten 24, 26 mit vierkantigem Querschnitt in den endseitigen Bereichen 23 und 25 des Elastomerelementes angebracht sind. Es findet somit vorzugsweise eine Horizontalschwingung des vorzugsweise horizontal ausgerichteten Elastomerelementes 21 derart statt, dass seine Enden 23, 25 in Richtung der Schwingungsbewegung 27, deren Schwingungen abgefedert beziehungsweise abgedämpft werden soll, schwingt.

Die Metallstreifen 38, 39 verlaufen in Längsrichtung des Elastomerelementes 21, wie es durch das Bezugszeichen 21 a dargestellt ist, wobei der Verlauf ungefähr in Längsrichtung aufgrund der Biegung der Metallstreifen 38, 39 stattfindet.

In dem mittleren Bereich 33a des Elastomerelementes ist der bereits erwähnte kreisförmige Ausschnitt zur Drehung des Elastomerelementes um seine Längsachse.

In Fig. 2b ist die erfindungsgemäße Federungsvorrichtung in einer verformten beziehungsweise auch ausgefederten Lage wiedergegeben, wohingegen in Fig. 2a eine Ruhelage der Federungsvorrichtung dargestellt ist.

Bei Vergleich der beiden Figuren 2a und 2b kann festgestellt werden, dass bei einer derartigen ausgefederten beziehungsweise verformten Lage des Elastomerelementes 21 ein Anliegen an die Konturen 28, 31 stattfindet, wenn eine Schwingungsbewegung des hier nicht dargestellten ersten Bauteiles in Richtung des Pfeiles 27a gegenüber dem zweiten Bauteil 22 stattfindet. Bei dieser Verformungsbewegung werden die Metallstreifenelemente 38 und 39 ebenso - in Bildebene betrachtet - nach rechts verformt und wirken entgegen einer Biegungskraft, die in Richtung des Pfeils 27a wirkt.

Die Endbereiche 23, 25 werden eine andere Verformung einnehmen als diejenigen Bereiche, in denen die Metallstreifenelemente 38, 39 innerhalb des Elastomerelementes angeordnet sind.

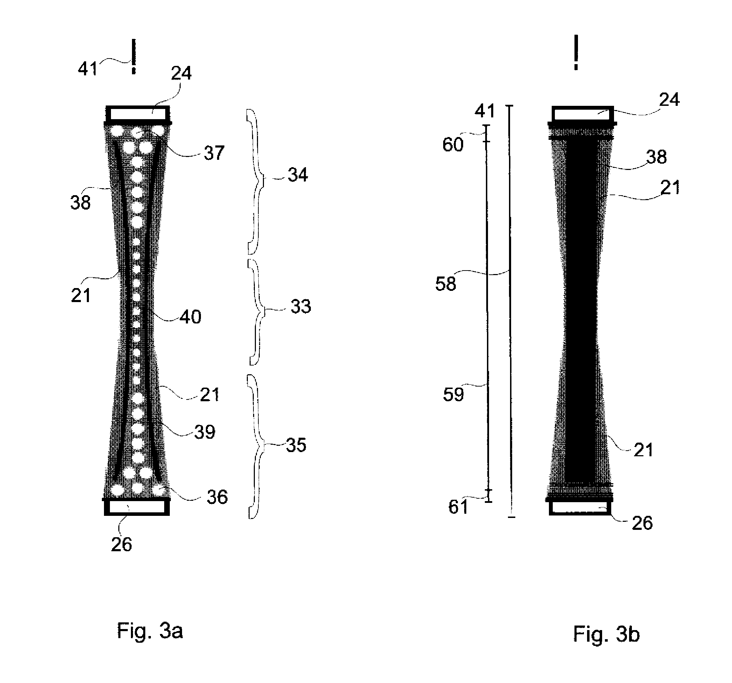

In Fig. 3a und 3b ist in einer weiteren schematischen Darstellung das Elastomerelement, wie es für die Erfindung mit dieser Federungsvorrichtung verwendet werden kann, dargestellt. In Fig. 3a befindet sich das Elastomerelement beziehungsweise Federelement 21 in einer 0°-Drehstellung. In Fig. 3b hingegen ist das Elastomerelement 21 um seine Längsachse 41 um 90° gedreht dargestellt. Dies entspricht einem Verriegelungszustand, da die Metallstreifenelemente 38, 39 mit ihrer Breitenrichtung sich in Schwingungsrichtung 27 erstrecken und somit nicht verbogen werden können.

Bei der Stellung gemäß Fig. 3a hingegen sind die Metallstreifenelemente 38, 39 derart angeordnet, dass deren Breitenrichtung quer zur Schwingungsrichtung 27 verlaufen und somit eine Biegung, wie sei in Fig. 2b dargestellt wird, möglich ist.

Die in Fig. 3b dargestellte Verrieglungsstellung hat zur Folge, dass das Elastomerelement sich lediglich als Gummipuffer in seiner Wirkung zeigt, sobald es die Metallstreifen 38, 39 zulassen. Zusätzliche Stoßdämpfung findet durch Endabschnitte 60, 61 statt, die metallstreifenelementfrei sind und somit auch trotz der Verriegelungsstellung der Metallstreifenelemente eine Schwingungsaufnahme und ein Abdämpfen beziehungsweise ein Abfedern dieser eingeleiteten Schwingung zulassen. Hierzu sind die Metallstreifenelemente 38, 39 mit einer Länge 59 ausgestattet, die geringer als die Gesamtlänge 58 des gesamten Elastomerelementes ist.

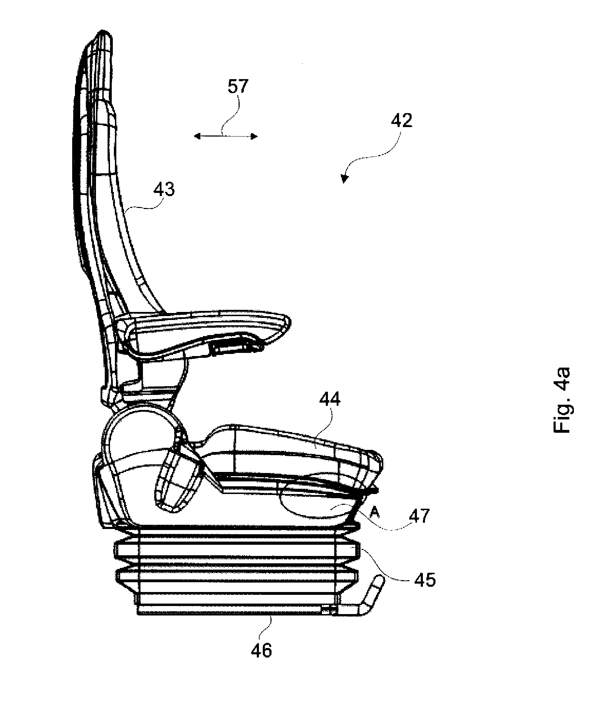

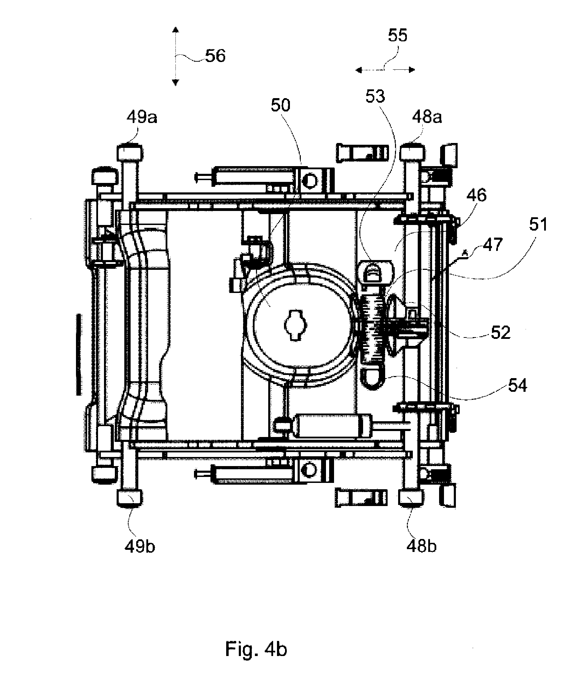

In Fig. 4a und Fig. 4b ist ein Fahrzeugsitz mit einer möglichen Positionierung der erfindungsgemäßen Federungsvorrichtung wiederergeben. Der Fahrzeugsitz 42 ist in einer Seitendarstellung mit einer Rückenlehne 43 und einem Sitzteil 44 wiedergegeben und kann sowohl auf eingeleitete Schwingungen in Fahrzeuglängsrichtungen 57, 55 als auch auf eingeleitete Schwingungen in Fahrzeugbreitenrichtung 56 abfedern beziehungsweise schwingungsreduzierend reagieren.

Ein Faltenbalg 45 ist zwischen dem Sitzoberteil und einem Sitzunterteil 46 angeordnet, in welchem Scherenarme zum Auf- und Abwärtsbewegen des Fahrzeugsitzes und weitere Details, wie sie in Fig. 4b in einer Draufsicht wiedergegeben werden, angeordnet sind. In einem Abschnitt 47 ist beispielsweise ein Ausschnitt des Gesamtaufbaus gemäß Fig. 4b angeordnet, in dem das Federelement 51 angeordnet ist. Das Federelement 51 ist nämlich zwischen einem ersten Bauteil 46, an dem diese Endbereiche 53 und 54 mit Befestigungselementen des Elastomerelementes 51 angeordnet sind, und einem zweiten Bauteil 52 schwingend derart angeordnet, dass - in Bildebene betrachtet - die Enden 53 und 54 bei einer Schwingungsbewegung der beiden Bauteile gemäß dem Pfeil 55 nach links und rechts verschwenkt werden.

Eine Luftfeder 50, dient zum auf- und abwärts gerichteten Federn des Fahrzeugsitzes.

Zusätzlich sind Rollenlager 49a, 49b, 48a, 48b an den Endbereichen von Scherenarmen zum Auf- und Abwärtsbewegen des Fahrzeugsitzes angeordnet. Das zweite Bauteil 52 kann zum Beispiel an einem der Schwenkachsen mit den Rollenlagern 48a, 48b des Scherenarmes angebracht sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Spiralfeder
- 2: Bauteil
- 3: Endbereich
- 4: Befestigungselement
- 5: Endbereich
- 6: Befestigungselement
- 7: Doppelpfeil
- 8: Kurvenbahnen
- 9: Kurvenbahnen
- 10: Kurvenbahnen
- 11: Kurvenbahnen
- 13: mittlerer Bereich
- 14: Endbereich
- 15: Endbereich
- 21: längliches Federelement
- 21 a: Längsrichtung
- 22: zweites Bauteil
- 23: Endbereich
- 24: Abschnitte
- 25: Endbereich
- 26: Abschnitte
- 27: Schwingungsbewegung
- 27a: Schwingungsbewegung
- 28: Konturen
- 29: Konturen
- 30: Konturen
- 31: Konturen
- 32: Einspannbereich
- 33: mittlerer Bereich
- 33a: mittlerer Bereich des Elastomerelementes
- 34: Endbereiche
- 35: Endbereiche
- 38: Metallstreifenelemente
- 39: Metallstreifenelemente
- 41: Längsachse
- 42: Fahrzeugsitz
- 43: Rückenlehnen
- 44: Sitzteil
- 45: Faltenbalg
- 46: Sitzoberteil
- 47: Abschnitt
- 50: Luftfeder
- 51: Federelement
- 52: Zweites Bauteil
- 53: Endteil
- 54: Endteil
- 55: Schwingungsbewegung
- 56: Fahrzeuglängs- und/oder Breitenrichtung
- 57: Fahrzeugslängs- und/oder Breitenrichtung
- 58: Gesamtlänge
- 59: Länge
- 60: Endabschnitte
- 61: Endabschnitte

## Patentansprüche

1. Federungsvorrichtung für Fahrzeugsitze (42) und/oder Fahrzeugkabinen zum Federkraftbeaufschlagen einer Schwingungsbewegung (55, 7, 27, 27a) von einem ersten gegenüber einem zweiten Bauteil (22, 52; 46), in Fahrzeugslängs- und/oder Breitenrichtung (56, 57), wobei mindestens ein sich in Fahrzeuglängs- und/oder Breitenrichtung (56, 57) erstreckendes, längliches Federelement (21) in mindestens einem Endbereich (35, 34) mit dem ersten Bauteil (46) und in seinem mittleren Bereich (32, 33) mit dem zweiten Bauteil (22) verbunden ist,
**dadurch gekennzeichnet, dass**
das längliche Federelement (21) aus biegsamen Elastomermaterial, welches stabförmig ausgebildet ist, besteht, wobei mindestens zwei, vorzugsweise zumindest teilweise parallel zueinander verlaufende Metallstreifenelemente (38, 39) in Längsrichtung (21 a) des Federelementes (21) innerhalb des Elastomermaterials angeordnet sind.

2. Federungsvorrichtung nach Anspruch 1,
**dadurch gekennzeichnet, dass**
der mittlere Bereich (33) des länglichen Federelementes (21) zumindest teilweise von dem zweiten Bauteil (22) in einem Einspannbereich (32) eingespannt ist.

3. Federungsvorrichtung nach Anspruch 1,
**dadurch gekennzeichnet, dass**
die Länge (59) der Metallstreifenelemente (38, 39) geringer als die Länge (58) des gesamten Federelementes (21) ist, sodass in den Endbereichen (23, 25) des Federelementes metallstreifenelementfreie Elastomerbereiche (60, 61) bestehen.

4. Federungsvorrichtung nach einem der Ansprüche 1 bis 3,
**dadurch gekennzeichnet, dass**
die Metallstreifenelemente (38, 39) zu ihren Endbereichen (23, 25) hin aus einer Parallelstellung heraus auseinander verlaufen.

5. Federungsvorrichtung nach einem der vorangegangenen Ansprüche,
**dadurch gekennzeichnet, dass**
das Federelement (21) im mittleren Bereich (33) einen runden Querschnitt aufweist, um im Einspannbereich (32) des komplementär ausgebildeten zweiten Bauteils (22) um seine Längsachse (41) drehbar angeordnet werden zu können.

6. Federungsvorrichtung nach Anspruch 5,
**dadurch gekennzeichnet, dass**
die Metallstreifenelemente (38, 39) in ihrer Breitenrichtung nach einer 90°-Drehung um ihre Längsachse (41) in Schwingungsrichtung (7, 27, 27a) der Bauteile (21, 46) verlaufen.

7. Federungsvorrichtung nach Anspruch 6,
**dadurch gekennzeichnet, dass**
die Metallstreifenelemente (38, 39) in ihrer Breitenrichtung in einer 0°-Drehstellung um ihre Längsachse (41) senkrecht zur Schwingungsrichtung (7, 27, 27a) der Bauteile (21, 46) verlaufen.

8. Federungsvorrichtung nach den vorangegangenen Ansprüchen,
**dadurch gekennzeichnet, dass**
die Endbereiche (23, 25) des Federelementes (21) einen Abschnitt (24, 26) mit quadratischem oder rechteckförmigen Querschnitt aufweisen.

9. Federungsvorrichtung nach den vorangegangenen Ansprüchen,
**dadurch gekennzeichnet, dass**
die Metallstreifenelemente (38, 39) in ihrer Breitenrichtung unbiegsam und senkrecht zur Seitenrichtung biegsam sind.

## Claims

1. Suspension device for vehicle seats (42) and/or vehicle cabins for applying a spring force to an oscillatory motion (55, 7, 27, 27a) of a first component relative to a second component (22, 52; 46), in the longitudinal and/or width direction (56, 57) of the vehicle, at least one elongate spring element (21) which extends in the longitudinal and/or width direction (56, 57) of the vehicle being connected to the first component (46) in at least one end region (35, 34) and to the second component (22) in the central region (32, 33) thereof,
**characterised in that** the elongate spring element (21) consists of rod-shaped flexible elastomer material, at least two metal strip elements (38, 39) which preferably extend in parallel with one another at least in part being arranged inside the elastomer material in the longitudinal direction (21 a) of the spring element (21).

2. Suspension device according to claim 1, **characterised in that** at least part of the central region (33) of the elongate spring element (21) is clamped by the second component (22) in a clamping region (32).

3. Suspension device according to claim 1, **characterised in that** the length (59) of the metal strip elements (38, 39) is shorter than the length (58) of the entire spring element (21), so that elastomer regions (60, 61) which are free from metal strip elements are formed in the end regions (23, 25) of the spring element.

4. Suspension device according to any of claims 1 to 3, **characterised in that** the metal strip elements (38, 39) extend from a parallel position and towards the end regions (23, 25) thereof.

5. Suspension device according to any of the preceding claims, **characterised in that** the spring element (21) has a round cross section in the central region (33) so as to enable said element to be arranged in the clamping region (32) of the complementary second component (22) in such a way that it can rotate about the longitudinal axis (41) thereof.

6. Suspension device according to claim 5, **characterised in that** the metal strip elements (38, 39), in the width direction thereof, extend in the direction of oscillation (7, 27, 27a) of the components (21, 46) once said elements have been rotated by 90° about the longitudinal axis (41) thereof.

7. Suspension device according to claim 6, **characterised in that** the metal strip elements (38, 39), in the width direction thereof, extend perpendicularly to the direction of oscillation (7, 27, 27a) of the components (21, 46) when said elements are in a position which has been rotated by 0° about the longitudinal axis (41) thereof.

8. Suspension device according to any of the preceding claims, **characterised in that** the end regions (23, 25) of the spring element (21) comprise a portion (24, 26) having a square or rectangular cross section.

9. Suspension device according to any of the preceding claims, **characterised in that** the metal strip elements (38, 39) are rigid in the width direction thereof and are flexible perpendicular to the lateral direction.

## Revendications

1. Dispositif de suspension pour des sièges de véhicules (42) et/ou des cabines de véhicules pour la génération, à l'aide d'une force élastique, d'un mouvement oscillant (55, 7, 27, 27a), par un premier composant en face d'un deuxième composant (22, 52 ; 46), dans la direction longitudinale et/ou de la largeur du véhicule (56, 57), au moins un élément de ressort (21) oblong, s'étendant dans la direction longitudinale et/ou de la largeur du véhicule (56, 57) dans au moins une zone d'extrémité (35, 34) étant relié avec le premier composant (46) et dans sa zone centrale (32, 33) avec le deuxième composant (22),
**caractérisé en ce que**
l'élément de ressort oblong (21) est constitué d'un matériau élastomère flexible qui se présente sous la forme d'une tige, au moins deux, de préférence au moins des éléments métalliques en forme de bandes (38, 39) s'étendant de manière partiellement parallèle entre eux, étant disposés dans la direction longitudinale (21 a) de l'élément de ressort (21) à l'intérieur du matériau élastomère.

2. Dispositif de suspension selon la revendication 1,
**caractérisé en ce que**
la zone centrale (33) de l'élément de ressort oblong (21) est serrée au moins partiellement du deuxième composant (22) dans une zone de serrage (32).

3. Dispositif de suspension selon la revendication 1,
**caractérisé en ce que**
la longueur (59) des éléments métalliques en forme de bandes (38, 39) est inférieure à la longueur (58) de l'ensemble de l'élément de ressort (21), de façon à ce que, dans les zones d'extrémité (23, 25), de l'élément de ressort se trouvent des zones élastomères exemptes d'éléments métalliques en forme de bandes (60, 61).

4. Dispositif de suspension selon l'une des revendications 1 à 3,
**caractérisé en ce que**
les éléments métalliques en forme de bandes (38, 39) s'écartent, en direction de leurs zones d'extrémités (23, 25), à partir d'une position parallèle entre eux.

5. Dispositif de suspension selon l'une des revendications précédentes,
**caractérisé en ce que**
l'élément de ressort (21) de la zone centrale (33) présente une section transversale ronde afin de pouvoir être disposé, de manière rotative autour de son axe longitudinal (41), dans la zone de serrage (32) du deuxième composant (22), qui présente une forme complémentaire.

6. Dispositif de suspension selon la revendication 5,
**caractérisé en ce que**
les éléments métalliques en forme de bandes (38, 39) s'étendent, dans la direction de leur largeur, après une rotation de 90°, autour de leur axe longitudinal (41) dans la direction des oscillations (7, 27, 27a) des composants (21, 46).

7. Dispositif de suspension selon la revendication 6,
**caractérisé en ce que**
les éléments métalliques en forme de bandes (38, 39) s'étendent, dans la direction de leur largeur, dans une position de rotation de 0°, autour de leur axe longitudinal (41) perpendiculairement à la direction des oscillations (7, 27, 27a) des composants (21, 46).

8. Dispositif de suspension selon l'une des revendications précédentes,
**caractérisé en ce que**
les zones d'extrémité (23, 25) de l'élément de ressort (21) présentent une portion (24, 26) avec une section transversale carrée ou rectangulaire.

9. Dispositif de suspension selon l'une des revendications précédentes,
**caractérisé en ce que**
les éléments métalliques en forme de bandes (38, 39) sont rigides dans la direction de leur largeur et flexibles perpendiculairement à la direction latérale.
